(19) Europäisches Patentamt / European Patent Office / Office européen des brevets

(11) **EP 4 230 434 A1**

(12) **EUROPEAN PATENT APPLICATION**
published in accordance with Art. 153(4) EPC

(43) Date of publication:
**23.08.2023  Bulletin 2023/34**

(21) Application number: **21880134.8**

(22) Date of filing: **13.10.2021**

(51) International Patent Classification (IPC):
**B60C 1/00** [(2006.01)]    **C08F 8/42** [(2006.01)]
**C08F 255/02** [(2006.01)]    **C08L 9/06** [(2006.01)]
**C08L 23/26** [(2006.01)]    **C08K 3/013** [(2018.01)]
**C08K 3/36** [(2006.01)]

(52) Cooperative Patent Classification (CPC):
**B60C 1/00; C08F 8/42; C08F 255/02; C08K 3/013;
C08K 3/36; C08L 9/06; C08L 23/26;** Y02T 10/86

(86) International application number:
**PCT/JP2021/037826**

(87) International publication number:
**WO 2022/080396 (21.04.2022 Gazette 2022/16)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.10.2020  JP 2020174246
15.10.2020  JP 2020174247**

(71) Applicant: **Mitsui Chemicals, Inc.
Tokyo 104-0028 (JP)**

(72) Inventors:
• **HARADA Katsuyoshi
Sodegaura-shi, Chiba 299-0265 (JP)**

• **MIZOBUCHI Yusuke
Sodegaura-shi, Chiba 299-0265 (JP)**
• **KOMATSU Chihiro
Sodegaura-shi, Chiba 299-0265 (JP)**
• **ICHIKAWA Tatsuya
Sodegaura-shi, Chiba 299-0265 (JP)**
• **TANAKA Hirokazu
Sodegaura-shi, Chiba 299-0265 (JP)**
• **ISHII Yuji
Ichihara-shi, Chiba 299-0108 (JP)**
• **HIGUCHI Kazuki
Ichihara-shi, Chiba 299-0108 (JP)**
• **ICHINO Kotaro
Ichihara-shi, Chiba 299-0108 (JP)**

(74) Representative: **Hoffmann Eitle
Patent- und Rechtsanwälte PartmbB
Arabellastraße 30
81925 München (DE)**

(54) **ORGANOSILICON COMPOUND GRAFT COPOLYMER, AND TIRE RUBBER COMPOSITION CONTAINING SAID COPOLYMER**

(57)    An object of the present invention is to provide a modifier suitable for obtaining a lubricating oil, a coating material, an adhesive, and the like with better smoothness and few bumps and to provide a rubber composition for a tire, which is suitable for preparing a tire with both excellent braking performance and excellent fuel efficiency. The present invention relates to an organosilicon compound graft copolymer (X) including a main chain derived from an ethylene/$\alpha$-olefin copolymer (A) and a graft part derived from an organosilicon compound (B) having one or more unsaturated groups; and a rubber composition for a tire, including 1 to 30 parts by mass of the organosilicon compound graft copolymer (X) based on 100 parts by mass of a diene rubber including an aromatic vinyl - conjugated diene copolymerized rubber.

**Description**

Technical Field

The present invention relates to an organosilicon compound graft copolymer and a rubber composition for a tire comprising the copolymer, which has excellent fuel efficiency and braking performance suitable for pneumatic tires.
More specifically, the present invention relates to an organosilicon compound graft copolymer suitable for obtaining a highly smooth composition when the graft copolymer is used as a modifier for polymer such as resin and elastomer and when a composition including the graft copolymer is applied to a substrate and the like.

Background Art

Modified olefin polymers prepared by graft-copolymerizing various unsaturated silane compound (organosilicon compound) components with a high molecular weight olefin polymer such as polyethylene and polypropylene have been used as a modifier or tackifier for resin or for other purposes.
In particular, in the art of compounding of elastomers such as rubber polymer, attempts have been made to provide a rubber polymer composition having excellent weather and aging resistance and excellent rubber elasticity by compounding ethylene/$\alpha$-olefin or ethylene/$\alpha$-olefin copolymer with a silicon-containing rubber polymer. However, it is known that simply mixing the two has the disadvantage of reduction of mechanical properties of the resulting composition.
To improve the disadvantage, the proposal is to use, as a modifier, a liquid-modified ethylene random copolymer prepared by graft-copolymerizing an ethylene random copolymer composed of ethylene and $\alpha$-olefin with 3 to 20 carbon atoms with an unsaturated silane compound component with 2 to 20 carbon atoms, wherein (i) the ethylene random copolymer comprises 25 to 75% by mole of an ethylene component and 25 to 75% by mole of an $\alpha$-olefin component, (ii) the unsaturated silane compound component has a graft ratio of 0.2 to 300 parts by weight based on 100 parts by weight of the ethylene random copolymer and (iii) the liquid modified ethylene random copolymer has a limiting viscosity $[\eta]$ measured in decalin at 135°C of 0.01 to 1.5 d/g (Patent Literature 1).
Meanwhile, a composition including a modifier, which provides a composition with better smoothness and few bumps, is desired in some applications.
Usually, styrene/butadiene copolymer rubber (SBR) has been used as a rubber material for tire treads of automobiles. While excellent braking performance has been required for automobile tires in terms of safety, improvement of fuel efficiency has also been considered for tires as there is an increased demand for low-fuel consumption of automobiles. For tires with low fuel consumption, silica has been usually mixed with a rubber composition for tire tread to improve braking performance. Silica, however, is easily aggregated and aggregates of silica increase rolling resistance, in other words, reduce fuel efficiency. Thus, a silane coupling agent is mixed as a dispersant.
Patent Literature 2 proposes, in order to disperse silica, a rubber composition comprising diene rubber, acid-modified polyolefin, and polyolefin to improve fuel efficiency.
However, it has been found that mixing the ethylene/$\alpha$-olefin copolymer modified with unsaturated carboxylic acid proposed in Patent Literature 2 causes the problem of reduction of processabilities such as an increase in viscosity and poor extrusion properties in molding, and braking performance of the resulting tire is likely to be reduced.

Citation List

Patent Literature

Patent Literature 1: JP1994-2791A
Patent Literature 2: JP2016-030800A

Summary of Invention

Technical Problem

An object of the present invention is to provide a modifier suitable for obtaining a lubricating oil, a coating material, an adhesive, and the like with better smoothness and few bumps.
Another object of the present invention is to provide a rubber composition for a tire, which is suitable for preparing a tire with both excellent braking performance and excellent fuel efficiency.

Solution to Problem

Accordingly, the present invention relates to the following items [1] to [11].

[1] An organosilicon compound graft copolymer (X), comprising a main chain derived from an ethylene/α-olefin copolymer (A) and a graft part derived from an organosilicon compound (B) having one or more unsaturated groups.
[2] The organosilicon compound graft copolymer (X) according to item [1], wherein the main chain derived from an ethylene/α-olefin copolymer (A) is an ethylene/α-olefin copolymer (A) having a weight-average molecular weight (Mw) of 2,000 to 14,000, a number-average molecular weight (Mn) of 1,600 to 7,000 and a molecular weight distribution (Mw/Mn) of 1.4 to 2.1.
[3] The organosilicon compound graft copolymer (X) according to item [1] or [2], wherein the main chain derived from an ethylene/α-olefin copolymer (A) is an ethylene/α-olefin copolymer (A) comprising 41 to 48% by mass of a component derived from ethylene (the total amount of the component derived from ethylene and a component derived from α-olefin is 100% by mass).
[4] The organosilicon compound graft copolymer (X) according to any one of items [1] to [3], wherein the mass of the graft part derived from an organosilicon compound (B) is 1% or more and less than 100% (the total amount of the main chain and the graft part is 100% by mass).
[5] The organosilicon compound graft copolymer (X) according to any one of items [1] to [4], wherein the organosilicon compound (B) is vinyltrimethoxysilane.
[6] The organosilicon compound graft copolymer (X) according to item [1], having a weight-average molecular weight (Mw) of 1,800 to 13,000, a number-average molecular weight (Mn) of 1,500 to 6,500, and a molecular weight distribution (Mw/Mn) of 1.4 to 2.1.
[7] The organosilicon compound graft copolymer (X) according to any one of items [1] to [6], further having a content of 0 to 0.3% by mass of a polymer component having a peak of molecular weight M determined by GPC in the range of $5 \leq \text{Log M} \leq 6$.
[8] A rubber composition for a tire, comprising 1 to 30 parts by mass of the organosilicon compound graft copolymer (X) according to item [1] based on 100 parts by mass of a diene rubber comprising an aromatic vinyl-conjugated diene copolymerized rubber.
[9] The rubber composition for a tire according to item [8], further comprising 5 to 150 parts by mass of an inorganic filler.
[10] The rubber composition for a tire according to item [9], wherein the inorganic filler is silica.
[11] The rubber composition for a tire according to any one of the items [8] to [10], wherein the diene rubber comprises SBR as the aromatic vinyl-conjugated diene copolymerized rubber and the diene rubber is a mixture of the SBR and BR comprising the SBR and the BR at a ratio of SBR/ BR = 100/0 to 1/99 (mass ratio).

Advantageous Effects of Invention

Since no bump is formed in the organosilicon compound graft copolymer (X) of the present invention, a lubricating oil, a coating material, an adhesive, and the like with excellent smoothness can be obtained by using the organosilicon compound graft copolymer (X) as a modifier.
Since the rubber composition for a tire of the present invention has a large tan δ at 0°C and a small tan δ at 60°C (attenuation rate), a tire with both excellent braking performance and fuel efficiency can be prepared.

Description of Embodiments

<Ethylene/α-olefin copolymer (A)>

The ethylene/α-olefin copolymer (A) constituting the main chain of the organosilicon compound graft copolymer (X) is a copolymer of ethylene and α-olefin. The α-olefin constituting the ethylene/α-olefin copolymer (A) usually has 3 to 20 carbon atoms, and specific examples thereof include propylene, 1-butene, 1-pentene, 1-hexene, 4-methyl-1-pentene, 1-heptene, 1-octene, 1-decene, 1-dodecene, 1-tetradecene, 1-hexadecene, and 1-eicosene. Of them, α-olefin having 3 to 8 carbon atoms, such as propylene, 1-butene, 1-hexene, and 1-octene are preferred, and propylene is particularly preferred.
The ethylene/α-olefin copolymer (A) according to the present invention comprises preferably 39 to 50% by mass and more preferably 41 to 48% by mass of a component derived from ethylene and preferably 50 to 61% by mass and more preferably 52 to 59% by mass of a component derived from α-olefin (provided that the total content of the component derived from ethylene and the component derived from α-olefin is 100% by mass).
The ethylene/α-olefin copolymer (A) according to the present invention has a weight-average molecular weight (Mw) of preferably 2,000 to 14,000 and more preferably 2,200 to 13,500, a number-average molecular weight (Mn) of 1,400 to 7,000 and more preferably 1,650 to 6,800 and a molecular weight distribution (Mw/Mn) of preferably 1.4 to 2.1 and more preferably 1.5 to 2.0.

The ethylene/α-olefin copolymer (A) which satisfies the above preferred range provides a coating material with excellent smoothness of the coating surface when the copolymer (A) is mixed in the coating material.

The amount of the component derived from ethylene [ethylene content (% by mass)] and Mn and the like of the ethylene/α-olefin copolymer (A) according to the present invention were measured by the following methods.

<Ethylene content (% by mass)>

The ethylene content (% by mass) of the ethylene/α-olefin copolymer was measured by $^{13}$C-NMR using the following apparatus under the following conditions.

The content was measured by using ECP500 Nuclear Magnetic Resonance Spectrometer made by JEOL Ltd. using a mixed solvent of o-dichlorobenzene/ benzene d-6 (80/20% by volume) as a solvent at a sample concentration of 55 mg/ 0.6 mL at a measurement temperature of 120°C, observation nuclear: $^{13}$C (125 MHz), sequence: single pulse proton decoupling, pulse width: 4.7 μ seconds (45° pulse), repetition time: 5.5 seconds, the number of accumulation 10,000 or more, and a reference value of chemical shift: 27.50 ppm.

The ethylene content was determined from the $^{13}$C-NMR spectrum measured as described above based on the reports by G. J. Ray (Macromolecules, 10, 773 (1977)), J. C. Randall (Macromolecules, 15, 353 (1982)) and K. Kimura (Polymer, 25, 4418(1984)) .

<Number-average molecular weight, weight-average molecular weight, molecular weight distribution>

The number-average molecular weight, the weight-average molecular weight, and the molecular weight distribution of the ethylene/α-olefin copolymer (A) according to the present invention were measured by HLC-8320GPC made by Tosoh Corporation as described below. TSK gel Super Multipore HZ-M (4 columns) were used as a separation column, the column temperature was set to 40°C, tetrahydrofuran (FUJIFILM Wako Pure Chemical Corporation) was used as a mobile phase, the development speed was 0.35 mL/ minute, the sample concentration was 5.5 g/ L, the amount of injection of sample was 20 μl, and a differential reflectometer was used as a detector. PStQuick MP-M made by Tosoh Corporation was used as standard polyethylene. The weight-average molecular weight (Mw) and the number-average molecular weight (Mn) were calculated according to general calibration in terms of the molecular weight of polystyrene, and the molecular weight distribution (Mw/Mn) was calculated from those values.

<Method for producing ethylene/α-olefin copolymer (A)>

The ethylene/α-olefin copolymer (A) according to the present invention may be produced by a known method including the method disclosed in patent literature, JP1982-123205A and JP2016-69406A.

<<Organic silicon compound (B)>>

The organosilicon compound (B) having one or more unsaturated groups, which constitutes the graft part of the organosilicon compound graft copolymer (X) of the present invention, usually has one or more unsaturated groups having 2 to 20 carbon atoms. Specific examples thereof include monovinyl silanes such as vinyltrimethoxysilane (VTMOS), vinyltriethoxysilane, vinyltrimethylsilane, diethylmethylvinylsilane, diacetoxyethylvinylsilane, diethoxymethylvinylsilane, ethoxydimethylvinylsilane, triacetoxyvinylsilane, tris(2-methoxyethoxy)vinylsilane, triphenylvinylsilane and triphenoxyvinylsilane, and polyvinyl silanes such as diphenyldivinylsilane and allyloxydimethylvinylsilane.

<Organosilicon compound graft copolymer (X)>

The organosilicon compound graft copolymer (X) comprises a main chain derived from the above ethylene/α-olefin copolymer (A) and a graft part derived from the above organosilicon compound (B) having one or more unsaturated groups.

In the organosilicon compound graft copolymer (X), the mass of the graft part derived from the organosilicon compound (B) is preferably 1% or more and less than 100%, and more preferably 3 to 50% (the total amount of the main chain and the graft part being 100% by mass).

The amount of graft derived from the organosilicon compound (B) in the organosilicon compound graft copolymer (X) was measured by the following method.

$^{1}$H-NMR spectrum was measured by using Nuclear Magnetic Resonance Spectrometer AVANCE IIIcryo-270 (270 MHz) made by Bruker Biospin under conditions of measurement solvent: chloroform-d, measurement temperature: 24.3°C, spectrum width: 15.6 ppm, pulse repetition time: 2.5 seconds and pulse width: 6.5 μ seconds. Then, the size of the peak of methoxy groups in the grafted organosilicon compound (B), for example, vinyltrimethoxysilane (VTMOS), was measured to calculate the amount of graft (graft ratio).

When the mass of the graft part derived from the organosilicon compound (B) is in the above range, the resultant has both excellent compatibility with resin and excellent compatibility with filler added (for example, silica).

The organosilicon compound graft copolymer (X) of the present invention has a number-average molecular weight (Mn) of 1,500 to 7,000, preferably 1,600 to 6,800 and more preferably 1,650 to 6,800 and a weight-average molecular weight (Mw) of 2,400 to 13,000 and preferably 2,500 to 12,500. Furthermore, the organosilicon compound graft copolymer (X) has a molecular weight distribution Mw/Mn of 1.4 to 2.1 and preferably 1.5 to 2.0.

It is preferable that the organosilicon compound graft copolymer (X) further has a content of 0 to 0.3% by mass of a polymer component having a peak of molecular weight M determined by GPC in the range of $5 \leq \text{Log } M \leq 6$.

For the measurement of the polymer component in the organosilicon compound graft copolymer (X), the peak area and the ratio of the peak area were calculated by using an analytical software of GPC Work Station EcoSEC-WS of HLC-8320GPC made by Tosoh Corporation to calculate the content (% by mass) of the polymer component in (X).

<Method for producing organosilicon compound graft copolymer (X)>

The organosilicon compound graft copolymer (X) of the present invention may be produced by reacting the ethylene/α-olefin copolymer (A) and the organosilicon compound (B) having one or more unsaturated groups according to the present invention in the presence of a radical initiator.

The reaction with the organosilicon compound (B) may be performed in the presence or absence of a solvent. Examples of methods of a reaction include a method in which the organosilicon compound (B) having one or more unsaturated groups and a radical initiator are continuously or intermittently added to the ethylene/α-olefin copolymer (A) which is heated, with stirring. The ratio of the organosilicon compound (B) having one or more unsaturated groups supplied in the graft reaction is usually 1 to 150 parts by mass and preferably 1.2 to 120 parts by mass based on 100 parts by mass of the ethylene/α-olefin copolymer (A). The ratio of the radical initiator is usually 0.04 to 5 parts by mass and preferably 0.1 to 1 part by mass based on 100 parts by mass of the ethylene/α-olefin copolymer (A). The temperature of the reaction is from 120 to 200°C and preferably from 130 to 180°C. The time for the reaction is usually 30 minutes to 10 hours and preferably 1 to 5 hours.

Usually, an organic peroxide is used as the radical initiator for graft reaction. Those whose half-life is an hour and which have a decomposition temperature of 100 to 180°C are preferred. Specific examples thereof include organic peroxides such as dicumyl peroxide (PERCUMYL D), di-tert-butyl peroxide (PERBUTYL D), 1,1-di(tert-butylperoxy)cyclohexane (PERHEXA C), tert-butylperoxy-2-ethylhexyl monocarbonate (PERBUTYL E), di-tert-hexylperoxide (PERHEXYL Z), t-hexylperoxybenxoate (PERHEXYL Z), 2,5-dimethyl-2,5-di(tert-butylperoxy)hexane (PERHEXA 25M), tert-butyl peroxybenzoate (PERBUTYL Z) and tert-butylperoxyisopropyl monocarbonate (PERBUTYL I) (all names in the parenthesis are the name of the product made by NOF Corporation).

<Application of organosilicon compound graft copolymer (X) >

The organosilicon compound graft copolymer (X) of the present invention may be suitably used for applications including an additive for lubricating oil, a coating material, an adhesive, and a compatibilizer.

<<Diene rubber>>

The diene rubber, which is one of the components included in the rubber composition of the present invention, is not particularly limited as long as it has a double bond in the main chain. Specific examples thereof include natural rubber (NR), isoprene rubber (IR), butadiene rubber (BR), aromatic vinyl-conjugated diene copolymerized rubber, chloroprene rubber (CR), acrylonitrile butadiene rubber (NBR), ethylene/propylene/diene copolymer rubber (EPDM), styrene/isoprene rubber, isoprene/butadiene rubber, nitrile rubber, and hydrogenated nitrile rubber. One of them may be used alone, or two or more of them may be used in combination.

Of these diene rubbers, aromatic vinyl-conjugated diene copolymerized rubber, NR, and BR are preferably used from the viewpoint of increased wear resistance and excellent processability.

Examples of aromatic vinyl-conjugated diene copolymerized rubbers according to the present invention include styrene/butadiene rubber (SBR), styrene/isoprene rubber, and styrene/butadiene/isoprene rubber (SBIR). SBR is particularly preferred.

Of these diene rubbers, SBR alone or a mixture (composition) of SBR and BR is preferred. SBR/ BR ranges from 100/0 to 1/99 (mass ratio), more preferably SBR/ BR = 50/50 to 90/10 (mass ratio), and further preferably SBR/ BR = 70/30 to 80/20 (mass ratio).

The terminal of the aromatic vinyl-conjugated diene copolymerized rubber may be modified with a hydroxyl group, a polyorganosiloxane group, a carbonyl group, or an amino group.

The weight-average molecular weight of the aromatic vinyl-conjugated diene copolymerized rubber is not particularly limited, and the aromatic vinyl-conjugated diene copolymerized rubber has a weight-average molecular weight of preferably 100,000 to 2,500,000, and more preferably 300,000 to 2,000,000 from the viewpoint of processability. The weight-average molecular weight (Mw) of the aromatic vinyl-conjugated diene copolymerized rubber is measured by gel permeation chromatography (GPC) using tetrahydrofuran as a solvent in terms of standard polystyrene.

It is preferable that the aromatic vinyl-conjugated diene copolymerized rubber includes 20 to 50% by mass of aromatic vinyl, and it is more preferable that the amount of vinyl bonds in conjugated diene is 20 to 70% by mass.

<Rubber composition for tire>

The rubber composition for a tire of the present invention comprises 1 to 30 parts by mass and preferably 2 to 20 parts by mass of the organosilicon compound graft copolymer (X) based on 100 parts by mass of the above diene rubber including the aromatic vinyl-conjugated diene copolymerized rubber.

Since the rubber composition for a tire of the present invention comprises the organosilicon compound graft copolymer (X) in the above range, excellent dispersibility of silica, in other words, low fuel consumption, can be achieved. When the proportion of the graft copolymer (X) is less than 1 part by mass based on 100 parts by mass of the diene rubber, fuel consumption is not sufficiently low. When the proportion is more than 30 parts by mass, the rubber composition has high hardness and the flexibility of the tire is lost.

<<Inorganic filler>>

It is preferable that the rubber composition for a tire of the present invention comprises an inorganic filler in addition to the organosilicon compound graft copolymer (X).

Specific examples of inorganic fillers according to the present invention include silica (also called white carbon), activated calcium carbonate, light calcium carbonate, heavy calcium carbonate, talc, silicic acid, and clay. One of the inorganic fillers may be used alone or two or more of them may be used in combination.

Of these inorganic fillers, one or more selected from the group consisting of silica are preferred from the viewpoint of uniform dispersibility in rubber matrix, excellent reinforcing properties, and versatility (cost).

<<Silica>>

Silica according to the present invention is not particularly limited and any known silica, which has been mixed in rubber composition used for, e.g., tires, may be used.

Examples of silica according to the present invention include fumed silica, calcined silica, precipitated silica, pulverized silica, molten silica, fused silica, and colloidal silica. One of them may be used alone or two or more of them may be used in combination.

Furthermore, the silica according to the present invention may have a CTAB adsorption specific surface area of preferably 50 to 300 $m^2/g$, and more preferably 80 to 250 $m^2/g$ to suppress aggregation of silica. The CTAB adsorption specific surface area as used herein refers to the value obtained by measuring the amount of adsorption of n-hexadecyl trimethylammonium bromide to the surface of silica according to JIS K6217-3:2001 "Part-3 Determination of specific surface area-CTAB adsorption."

When the rubber composition for a tire of the present invention includes an inorganic filler such as silica, the content is preferably 5 to 150 parts by mass, more preferably 10 to 120 parts by mass, and further preferably 20 to 100 parts by mass based on 100 parts by mass of the above diene rubber.

«Silane coupling agent»

It is preferable that the rubber composition for a tire of the present invention further comprises a silane coupling agent in addition to the organosilicon compound graft copolymer (X) and the inorganic filler such as silica. The silane coupling agent according to the present invention is not particularly limited, and any known silane coupling agent, which has been mixed in rubber composition used for, e.g., tires, may be used.

Specific examples of silane coupling agents according to the present invention include bis(3-triethoxysilylpropyl)tetrasulfide, bis(3-triethoxysilylpropyl)trisulfide, bis(3-triethoxysilylpropyl)disulfide, bis(2-triethoxysilylethyl)tetrasulfide, bis(3-trimethoxysilylpropyl)tetrasulfide, bis(2-trimethoxysilylethyl)tetrasulfide, 3-mercaptopropyltrimethoxysilane, 3-mercaptopropyl triethoxysilane, 2-mercaptoethyltrimethoxysilane, 2-mercaptoethyltriethoxysilane, 3-trimethoxysilylpropyl-N,N-dimethyl thiocarbamoyltetrasulfide, 3-triethoxysilylpropyl-N,N-dimethyl thiocarbamoyltetrasulfide, 2-triethoxysilylethyl-N,N-dimethyl thiocarbamoyltetrasulfide, 3-trimethoxysilylpropyl benzothiazole tetrasulfide, 3-triethoxysilylpropyl benzothiazole tetrasulfide, 3-triethoxysilylpropyl methacrylate monosulfide, 3-trimethoxysilylpropyl methacrylate monosulfide, bis(3-diethoxymethylsilylpropyl)tetrasulfide, dimethoxymethylsilylpropyl-N,N-dimethyl thiocarbamoyl tetrasulfide and dimethoxymethylsilylpropyl benzothiazole tetrasulfide. A compound prepared by previously oligomerizing one or more of them may also be used.

Examples of silane coupling agents also include a mercapto silane coupling agent such as γ-mercaptopropyl triethoxysilane and 3-[ethoxybis(3,6,9,12,15-pentaoxaoctacosan-1-yloxy)silyl]-1-propanethiol; a thiocarboxylate silane coupling agent such as 3-octanoylthiopropyl triethoxysilane; and a thiocyanate silane coupling agent such as 3-thiocyanate propyl triethoxysilane. One of them may be used alone or two or more of them may be used in combination. A compound prepared by previously oligomerizing one or more of them may also be used.

Of them, bis-(3-triethoxysilylpropyl)tetrasulfide and/or bis-(3-triethoxysilylpropyl)disulfide are preferably used. Specific examples thereof include Si69 [bis-(3-triethoxysilylpropyl)tetrasulfide; made by Evonik Degussa] and Si75 [bis-(3-triethoxysilylpropyl)disulfide; made by Evonik Degussa].

When the rubber composition for a tire of the present invention comprises the above silane coupling agent, the content is preferably 1 part by mass or more, and more preferably 1 to 10 parts by mass based on 100 parts by mass of the diene rubber comprising the above aromatic vinyl-conjugated diene copolymerized rubber.

The content of the above silane coupling agent is preferably 0.1 to 20 parts by mass, and more preferably 0.5 to 15 parts by mass based on 100 parts by mass of the above silica.

<<Carbon black>>

It is preferable that the rubber composition for a tire of the present invention further comprises carbon black.

Examples of carbon black according to the present invention include furnace carbon black such as SAF, ISAF, HAF, FEF, GPE, and SRF. One of them may be used alone or two or more of them may be used in combination.

Furthermore, the carbon black according to the present invention may have a nitrogen adsorption specific surface area ($N_2SA$) of preferably 10 to 300 $m^2$/g and more preferably 20 to 200 $m^2$/g from the viewpoint of processability in mixing of the rubber composition for a tire.

$N_2SA$ as used herein refers to the value obtained by measuring the amount of adsorption of nitrogen to the surface of carbon black according to JIS K6217-2:2001 "Part-2 Determination of specific surface area -nitrogen adsorption, single point method."

When the rubber composition for a tire of the present invention comprises the above carbon black, the content is preferably 1 to 100 parts by mass, and more preferably 5 to 80 parts by mass based on 100 parts by mass of the diene rubber comprising the above aromatic vinyl-conjugated diene copolymerized rubber.

<<Other components>>

A known additive usually used for a rubber composition for a tire may be added to the rubber composition for a tire of the present invention in addition to the above component, including a chemical foaming agent such as a hollow polymer; a vulcanizing agent such as sulfur; a vulcanization accelerator such as sulfenamide, guanidine, thiazole, thiourea, and thiuram; a vulcanization accelerator auxiliary such as zinc oxide and stearic acid; wax; aroma oil; an amine antioxidant such as paraphenylene diamine (e.g., N,N'-di-2-naphthyl-p-penylenediamine, N-1,3-dimethylbutyl-N'-phenyl-p-phenylenediamine) and a ketone-amine condensate (e.g., 2,2,4-trimethyl-1,2-dihydroquinoline); and a plasticizer.

The amount of such additives to be mixed may be a usual amount as long as it does not interfere with the object of the present invention. For example, 0.5 to 5 parts by mass of sulfur, 0.1 to 5 parts by mass of a vulcanization accelerator, 0.1 to 10 parts by mass of a vulcanization accelerator auxiliary 0.5 to 5 parts by mass of an antioxidant, 1 to 10 parts by mass of wax and 5 to 30 parts by mass of an aroma oil may be mixed based on 100 parts by mass of the diene rubber.

<Method for producing rubber composition for tire>

The method for producing the rubber composition for a tire of the present invention is not particularly limited. Examples thereof include a method in which the components described above are kneaded by a known method using a known apparatus (e.g., Banbury mixer, kneader, roll).

Furthermore, the rubber composition for a tire of the present invention may be vulcanized or cross-linked under known vulcanization or cross-linking conditions.

Examples

Hereinafter the present invention will be described in detail with reference to Examples, but the present invention is not limited to these Examples.

The ethylene/α-olefin copolymer (A), the organosilicon compound graft copolymer (X), the diene rubber, and other components used in Examples and Comparative Examples are shown below.

[Ethylene/propylene copolymer (A-1)]

An ethylene/propylene copolymer (A-1) having a Mw of 12,500, Mn of 6,600, and Mw/Mn of 1.9 with an ethylene content of 44.8% by mass was used as the ethylene/α-olefin copolymer (A) (described as "(A)" in Table 1).

<<Organosilicon compound graft copolymer (X)>>

An organosilicon compound graft copolymer (X-1) (may be abbreviated as (X-1) below) prepared by the following method was used as the organosilicon compound graft copolymer (X) (described as "(X)" in Table 1).

[Production of organosilicon compound graft copolymer (X-1)]

181 g of the above ethylene/propylene copolymer (A-1) and 25.5 g of vinyltrimethoxysilane (VTMOS), which is an organosilicon compound (B) having one or more unsaturated groups , were put in a 1 L glass reaction vessel. The air of the vessel was replaced with nitrogen and then the vessel was sealed. The temperature was increased to 160°C with stirring by a double anchor blade at 200 rpm. 50 mL of a solution prepared by dissolving 1.02 g of dicumyl peroxide (made by NOF Corporation, product name: PERCUMYL D) in toluene was added dropwise thereto with stirring at 400 rpm over 60 minutes. After the completion of the dropwise addition, stirring was continued for 90 minutes. Then the rotation number of stirring was reduced to 300 rpm and the solution was cooled to 50°C. The pressure of the vessel was released and the vessel was opened. The reaction solution was taken out and toluene, the solvent, and VTMOS were vacuum distilled using an evaporator. Subsequently, the resultant was vacuum dried at 90°C to give an organosilicon compound graft copolymer (X-1).

The amount of graft of VTMOS in the organosilicon compound graft copolymer (X-1) was 11.1% by mass.

The resulting organosilicon compound graft copolymer (X-1) has a weight-average molecular weight (Mw) of 11,600, a number-average molecular weight (Mn) of 6,100 and a molecular weight distribution (Mw/Mn) of 1.9.

[Ethylene/α-olefin copolymer (A-2)]

An ethylene/propylene copolymer (A-2) having a Mw of 2,700, a Mn of 1,800, and a Mw/Mn of 1.5 with an ethylene content of 42.9% by mass was used as the ethylene/α-olefin copolymer (A).

<<Organosilicon compound graft copolymer (X-2)>>

An organosilicon compound graft copolymer (X-2) prepared by the following method was used as the organosilicon compound graft copolymer (X).

[Production of organosilicon compound graft copolymer (X-2)]

177 g of the above ethylene/propylene copolymer (A-2) and 25.5 g of vinyltrimethoxysilane (VTMOS), which is an organosilicon compound (B) having one or more unsaturated groups , were put in a 1 L glass reaction vessel. The air of the vessel was replaced with nitrogen and then the vessel was sealed. The temperature was increased to 160°C with stirring by a double anchor blade at 200 rpm. 50 mL of a solution prepared by dissolving 1.02 g of dicumyl peroxide (made by NOF Corporation, product name: PERCUMYL D) in toluene was added dropwise thereto with stirring at 400 rpm over 60 minutes. After the completion of the dropwise addition, stirring was continued for 90 minutes. Then the rotation number of stirring was reduced to 300 rpm and the solution was cooled to 50°C. The pressure of the vessel was released and the vessel was opened. The reaction solution was taken out and toluene, the solvent, and VTMOS were vacuum distilled using an evaporator. Subsequently, the resultant was vacuum dried at 90°C to give an organosilicon compound graft copolymer (X-2).

The amount of graft of VTMOS in the organosilicon compound graft copolymer (X-2) was 11.9% by mass.

The resulting organosilicon compound graft copolymer (X-2) has a weight-average molecular weight (Mw) of 2,600, a number-average molecular weight (Mn) of 1,650, and a molecular weight distribution (Mw/Mn) of 1.6.

[Ethylene/α-olefin copolymer (A-3)]

An ethylene/propylene copolymer (A-3) having a Mw of 4,800, a Mn of 2,800, and a Mw/Mn of 1.7 with an ethylene content of 41.3% by mass was used as the ethylene/α-olefin copolymer (A).

<<Organosilicon compound graft copolymer (X-3)>>

An organosilicon compound graft copolymer (X-3) prepared by the following method was used as the organosilicon compound graft copolymer (X).

[Production of organosilicon compound graft copolymer (X-3)]

177 g of the above ethylene/propylene copolymer (A-3) and 25.5 g of vinyltrimethoxysilane (VTMOS), which is an organosilicon compound (B) having one or more unsaturated groups, were put in a 1 L glass reaction vessel. The air of the vessel was replaced with nitrogen and then the vessel was sealed. The temperature was increased to 160°C with stirring by a double anchor blade at 200 rpm. 50 mL of a solution prepared by dissolving 1.02 g of dicumyl peroxide (made by NOF Corporation, product name: PERCUMYL D) in toluene was added dropwise thereto with stirring at 400 rpm over 60 minutes. After the completion of the dropwise addition, stirring was continued for 90 minutes. Then the rotation number of stirring was reduced to 300 rpm and the solution was cooled to 50°C. The pressure of the vessel was released and the vessel was opened. The reaction solution was taken out and toluene, the solvent, and VTMOS were vacuum distilled using an evaporator. Subsequently, the resultant was vacuum dried at 90°C to give an organosilicon compound graft copolymer (X-3).
The amount of graft of VTMOS in the organosilicon compound graft copolymer (X-3) was 12.1% by mass.
The resulting organosilicon compound graft copolymer (X-3) has a weight-average molecular weight (Mw) of 4,600, a number-average molecular weight (Mn) of 2,750, and a molecular weight distribution (Mw/Mn) of 1.7.

<<Organosilicon compound graft copolymer (X-4)>>

An organosilicon compound graft copolymer (X-4) prepared by the following method was used as the organosilicon compound graft copolymer (X).

[Production of organosilicon compound graft copolymer (X-4)]

181 g of the above ethylene/propylene copolymer (A-1) and 25.5 g of vinyltrimethoxysilane (VTMOS), which is an organosilicon compound (B) having one or more unsaturated groups, were put in a 1 L glass reaction vessel. The air of the vessel was replaced with nitrogen and then the vessel was sealed. The temperature was increased to 160°C with stirring by a double anchor blade at 200 rpm. 50 mL of a solution prepared by dissolving 10.01 g of dicumyl peroxide (made by NOF Corporation, product name: PERCUMYL D) in toluene was added dropwise thereto with stirring at 400 rpm over 60 minutes. After the completion of the dropwise addition, stirring was continued for 90 minutes. Then the rotation number of stirring was reduced to 300 rpm and the solution was cooled to 50°C. The pressure of the vessel was released and the vessel was opened. The reaction solution was taken out and toluene, the solvent, and VTMOS were vacuum distilled using an evaporator. Subsequently, the resultant was vacuum dried at 90°C to give an organosilicon compound graft copolymer (X-4).
The amount of graft of VTMOS in the organosilicon compound graft copolymer (X-4) was 10.9% by mass.
The resulting organosilicon compound graft copolymer (X-4) was found to be bimodal in the measurement of the molecular weight by GPC. The organosilicon compound graft copolymer (X-4) has a weight-average molecular weight (Mw) of 14,600, a number-average molecular weight (Mn) of 6,300, and a molecular weight distribution (Mw/Mn) of 2.3 at the first peak. The organosilicon compound graft copolymer (X-4) has a weight-average molecular weight (Mw) of 458,100, a number-average molecular weight (Mn) of 412,700, and a molecular weight distribution (Mw/Mn) of 1.1 at the second peak.
Properties of the resulting organosilicon compound graft copolymer (X) were observed by the following methods.

[Observation of surface]

0.327 g and 0.109 g each of the organosilicon compound graft copolymer (X-1) was applied to two 26 mm long × 26 mm wide glass plates (at a film thickness of 0.6 mm and 0.2 mm, respectively, and a density of 0.838 g/ cm$^3$). The presence of bump was visually observed.

[Measurement of polymer component of organosilicon compound graft copolymer (X)]

The amount of the polymer component in the organosilicon compound graft copolymer (X) was measured by the method described above.

[Examples 1 to 4]

The surface of the organosilicon compound graft copolymers (X-1), (X-2), (X-3), and (X-4) produced by the above method was observed by the above method. As a result, no bump was found in any of the compounds. Meanwhile, for (X-1), (X-2), and (X-3), the number of cells mixed in the coating film (0.6 mm thick) was each 0, 10, and 90, which are less than 100 (excellent coating properties). By contrast, for (X-4), the number of cells mixed in the coating film (0.6 mm thick) was 150, which is 100 or more and less than 250 (moderate coating properties).
The evaluation criteria for coating properties are as follows in Table 1.
Good: the number of cells mixed in coating film (0.6 mm thick) is 0 to less than 100.
Moderate: the number of cells mixed in coating film (0.6 mm thick) is 100 to less than 250.
Poor: the number of cells mixed in coating film (0.6 mm thick) is 250 or more.
The results are shown in Table 1.

[Table 1]

Table 1

| | | Ex. 1 | Ex. 2 | Ex. 3 | Ex. 4 |
|---|---|---|---|---|---|
| (A) | | A-1 | A-2 | A-3 | A-1 |
| | Mw | 12,500 | 2,700 | 4,800 | 12,500 |
| | Mn | 6,600 | 1,800 | 2,800 | 6,600 |
| | Mw/Mn | 1.9 | 1.5 | 1.7 | 1.9 |
| Radical initiator based on (A) | Part(s) by mass | 0.56 | 0.58 | 0.56 | 5.50 |
| (X) | | X-1 | X-2 | X-3 | X-4 |
| | Mw | 11,600 | 2,600 | 4,600 | 14,600 |
| | Mn | 6,100 | 1,650 | 2,750 | 6,300 |
| | Mw/Mn | 1.9 | 1.6 | 1.7 | 2.3 |
| Polymer component in (X) | Mw | | | | 458,100 |
| | Mn | | | | 412,700 |
| | Mw/Mn | | | | 1.1 |
| Amount of polymer component in (X) (% by mass) | | 0 | 0 | 0 | 1 |
| Presence of bump in coating film | | None | None | None | None |
| Coating properties | | Good | Good | Good | Moderate |

<<Diene rubber>>

(1) Diene rubber-1: styrene/butadiene rubber (SBR), Nipol (registered trademark) NS116 (made by ZEON CORPORATION) [styrene content = 21%, Mooney viscosity = 45, specific gravity 0.93]
(2) Diene rubber-2: butadiene rubber (BR) Nipol (registered trademark) 1220 (made by ZEON CORPORATION) [Mooney viscosity = 44, specific gravity = 0.90]

<<Compounding agent>>

(1) Zinc white, JIS#2
(2) Aroma process oil: Diana Process (registered trademark) AH-16 (made by Idemitsu Kosan Co., Ltd.)
(3) Wet silica: Nipsil (trademark) VN3 (made by Tosoh Silica Corporation)
(4) Carbon black: Asahi #80 (Asahi Carbon Co., Ltd.)
(5) Silane coupling agent: Silanogran (trademark) Si69 (made by Techno Preknead HIDA)
(6) Vulcanization accelerator (CBS): Sancelar (trademark) CM (Sanshin Chemical Industry Co., Ltd.)
(7) Vulcanization accelerator (DPG): Sancelar (trademark) D-G (Sanshin Chemical Industry Co., Ltd.)

Properties of the rubber compositions and the like prepared in Examples and Comparative Examples were measured by the following methods.

(1) Compression set (CS)

A cross-linked body with a diameter of 29 mm and a height (thickness) of 12.5 mm was used as a specimen according to JIS K 6262. The specimen was compressed by 25% relative to the height of the specimen before applying load (12.5 mm). The specimen was set in a gear oven at 70°C together with the spacer and heat-treated for 22 hours. The specimen was taken out and left at room temperature for 30 minutes. Then the height of the specimen was measured and the compression set (%) was calculated by the following equation.

For the compression set (0°C), the specimen was set in a thermostatic bath at 0°C and treated for 22 hours. Then the specimen was taken out from the thermostatic bath and left for 30 minutes. After that, the height of the specimen was measured and the compression set (%) was calculated by the following equation.

$$\text{Compression set (\%)} = \{(t0-t1) / (t0-t2)\} \times 100$$

t0: Height of specimen before a test
t1: Height of specimen after being treated under the above conditions and being left at room temperature for 30 minutes
t2: Height of specimen attached to the mold for measurement

(2) Dynamic viscoelasticity test

The temperature dependency of loss tangent, tan $\delta$ (an index of vibration damping), of a 1 mm thick vulcanized rubber sheet was measured by using a viscoelastometer (Model RDS-2) made by Rheometric Scientific under conditions of a measurement temperature of 70 to 100°C, a frequency of 10 Hz, a distortion factor of 1.0% and a temperature increase rate of 4°C/ minute, tan $\delta$ (damping rate) at 0°C of the rubber composition was defined as an indicator of the braking performance of the tire. A larger tan $\delta$ at 0°C indicates a better braking performance. Furthermore, tan $\delta$ (damping rate) at 60°C of the rubber composition was defined as an indicator of the fuel efficiency of the car. A smaller tan $\delta$ at 60°C indicates a higher fuel efficiency.

[Example 5]

Diene rubber-1, diene rubber-2, the graft copolymer (X-1), silica, and a silane coupling agent were mixed in the amount shown in Table 2 using a 1.7 1 closed Banbury mixer for 2 minutes. Then, carbon black, aroma oil, zinc white, and stearic acid were added thereto and the mixture was mixed for 2 minutes to prepare a master batch. This master batch, a vulcanization accelerator, and sulfur were mixed by an 8 inch open roll whose temperature of the front roll and the rear roll was 50°C to prepare a rubber composition, and the rubber composition was pressed and vulcanized in a mold of 10 × 10 × 0.1 cm at 170°C for 10 minutes to prepare a vulcanized rubber composition for a tire. The resulting rubber composition for a tire was tested for dynamic viscoelasticity. Furthermore, the rubber composition for a tire was cross-linked under conditions of 170°C and 15 minutes to give a vulcanized rubber composition with a thickness of 12.5 mm and a diameter of 29 mm. The compression set was measured using the resulting rubber composition. The properties of the resulting vulcanized rubber for a tire were measured by the method described above. The results of the evaluation are shown in Table 2.

[Example 6]

A vulcanized rubber composition for a tire was prepared in the same manner as in Example 5 except for changing the formulation to that shown in Table 2 instead of preparing the rubber composition for a tire used in Example 5. The properties of the resulting vulcanized rubber for a tire were measured by the method described above. The results of the evaluation are shown in Table 2.

[Example 7]

A vulcanized rubber composition for a tire was prepared in the same manner as in Example 5 except for changing the formulation to that shown in Table 2 instead of preparing the rubber composition for a tire used in Example 5. The properties of the resulting vulcanized rubber for a tire were measured by the method described above. The results of the evaluation are shown in Table 2.

[Comparative Example 1]

A vulcanized rubber composition was prepared in the same manner as in Example 1 except for not using the graft copolymer (X-1) used in Example 1. The properties of the resulting vulcanized rubber were measured by the method described above. The results of the evaluation are shown in Table 2.

[Table 2]

Table 2

| | Ex. 5 | Ex. 6 | Ex. 7 | Comp. Ex. 1 |
|---|---|---|---|---|
| <Formulation> | | | | |
| Diene rubber-1: Nipol NS 116R | 75 | 75 | 75 | 75 |
| Diene rubber-2: Nipol 1220 | 25 | 25 | 25 | 25 |
| Nipsil VN3 | 36 | 36 | 36 | 36 |
| Si-69 | 4 | 4 | 4 | 4 |
| Asahi #80 | 40 | 40 | 40 | 40 |
| Zinc white# 1 | 3 | 3 | 3 | 3 |
| Stearic acid | 2 | 2 | 2 | 2 |
| AH-16 | 45 | 37.5 | 25 | 50 |
| Graft copolymer (X-1) | 5 | 12.5 | 25 | - |
| <Properties> | | | | |
| Compression set CS@0°C×22h (%) | 14 | 13 | 12 | 14 |
| < Tensile viscoelasticity> | | | | |
| tan$\delta$ @0°C | 0.33 | 0.32 | 0.33 | 0.34 |
| tan$\delta$ @60°C | 0.15 | 0.15 | 0.14 | 0.17 |

## Claims

1. An organosilicon compound graft copolymer (X), comprising a main chain derived from an ethylene/$\alpha$-olefin copolymer (A) and a graft part derived from an organosilicon compound (B) having one or more unsaturated groups.

2. The organosilicon compound graft copolymer (X) according to claim 1, wherein the main chain derived from an ethylene/$\alpha$-olefin copolymer (A) is an ethylene/$\alpha$-olefin copolymer (A) having a weight-average molecular weight (Mw) of 2,000 to 14,000, a number-average molecular weight (Mn) of 1,600 to 7,000 and a molecular weight distribution (Mw/Mn) of 1.4 to 2.1.

**3.** The organosilicon compound graft copolymer (X) according to claim 1 or 2, wherein the main chain derived from an ethylene/α-olefin copolymer (A) is an ethylene/α-olefin copolymer (A) comprising 41 to 48% by mass of a component derived from ethylene (the total amount of the component derived from ethylene and a component derived from α-olefin is 100% by mass).

**4.** The organosilicon compound graft copolymer (X) according to any one of claims 1 to 3, wherein the mass of the graft part derived from an organosilicon compound (B) is 1% or more and less than 100% (the total amount of the main chain and the graft part is 100% by mass).

**5.** The organosilicon compound graft copolymer (X) according to any one of claims 1 to 4, wherein the organosilicon compound (B) is vinyltrimethoxysilane.

**6.** The organosilicon compound graft copolymer (X) according to claim 1, having a weight-average molecular weight (Mw) of 1,800 to 13,000, a number-average molecular weight (Mn) of 1,500 to 6,500, and a molecular weight distribution (Mw/Mn) of 1.4 to 2.1.

**7.** The organosilicon compound graft copolymer (X) according to any one of claims 1 to 6, further having a content of 0 to 0.3% by mass of a polymer component having a peak of molecular weight M determined by GPC in the range of $5 \leq \text{Log } M \leq 6$.

**8.** A rubber composition for a tire, comprising 1 to 30 parts by mass of the organosilicon compound graft copolymer (X) according to claim 1 based on 100 parts by mass of a diene rubber comprising an aromatic vinyl-conjugated diene copolymerized rubber.

**9.** The rubber composition for a tire according to claim 8, further comprising 5 to 150 parts by mass of an inorganic filler.

**10.** The rubber composition for a tire according to claim 9, wherein the inorganic filler is silica.

**11.** The rubber composition for a tire according to any one of claims 8 to 10, wherein the diene rubber comprises SBR as the aromatic vinyl-conjugated diene copolymerized rubber and the diene rubber is a mixture of the SBR and BR comprising the SBR and the BR at a ratio of SBR/ BR = 100/0 to 1/99 (mass ratio).

## INTERNATIONAL SEARCH REPORT

| International application No. |
| --- |
| **PCT/JP2021/037826** |

### A. CLASSIFICATION OF SUBJECT MATTER

*B60C 1/00*(2006.01)i; *C08F 8/42*(2006.01)i; *C08F 255/02*(2006.01)i; *C08L 9/06*(2006.01)i; *C08L 23/26*(2006.01)i; *C08K 3/013*(2018.01)i; *C08K 3/36*(2006.01)i
FI:  C08L9/06; C08F8/42; C08L23/26; C08K3/013; C08K3/36; B60C1/00 A; C08F255/02

According to International Patent Classification (IPC) or to both national classification and IPC

### B. FIELDS SEARCHED

Minimum documentation searched (classification system followed by classification symbols)
B60C1/00; C08F8/42; C08F255/02; C08L9/06; C08L23/26; C08K3/013; C08K3/36

Documentation searched other than minimum documentation to the extent that such documents are included in the fields searched
Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)
CAplus/REGISTRY (STN)

### C. DOCUMENTS CONSIDERED TO BE RELEVANT

| Category* | Citation of document, with indication, where appropriate, of the relevant passages | Relevant to claim No. |
| --- | --- | --- |
| X | JP 61-246215 A (MITSUI PETROCHEMICAL INDUSTRIES, LTD.) 01 November 1986 (1986-11-01)<br>claims, page 2, upper right column, Problem to be solved by the invention, examples | 1-7 |
| X | JP 63-108015 A (UNIROYAL CHEMICAL CO., INC.) 12 May 1988 (1988-05-12)<br>claims, examples 1-3 | 1-7 |
| X | JP 2000-204127 A (FUJIKURA LTD.) 25 July 2000 (2000-07-25)<br>claims, examples | 1 |
| X | WO 2017/057724 A1 (MITSUI CHEMICALS INC.) 06 April 2017 (2017-04-06)<br>claims, examples | 1, 7-11 |
| A | WO 2017/026460 A1 (SUMITOMO SEIKA CHEMICALS CO., LTD.) 16 February 2017 (2017-02-16)<br>table 1 | 1-11 |
| P, X | JP 2021-24912 A (MITSUI CHEMICALS INC.) 22 February 2021 (2021-02-22)<br>claims, examples | 1-11 |

☐ Further documents are listed in the continuation of Box C.      ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **06 December 2021** | **21 December 2021** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

International application No.

**PCT/JP2021/037826**

| Patent document cited in search report | | | Publication date (day/month/year) | Patent family member(s) | | | Publication date (day/month/year) |
|---|---|---|---|---|---|---|---|
| JP | 61-246215 | A | 01 November 1986 | US | 4908411 | A | |
| | | | | claims, examples, especially example 3 | | | |
| | | | | US | 5093418 | A | |
| | | | | EP | 183493 | A2 | |
| JP | 63-108015 | A | 12 May 1988 | US | 4759992 | A | |
| | | | | claims, examples 1-3 | | | |
| | | | | EP | 260103 | A1 | |
| | | | | DE | 3774974 | A | |
| | | | | AU | 7817787 | A | |
| | | | | BR | 8706602 | A | |
| | | | | ZA | 8708813 | A | |
| | | | | CA | 1297222 | A | |
| | | | | KR | 10-1988-0004004 | A | |
| | | | | CN | 87106234 | A | |
| | | | | ZA | 878813 | B | |
| JP | 2000-204127 | A | 25 July 2000 | (Family: none) | | | |
| WO | 2017/057724 | A1 | 06 April 2017 | (Family: none) | | | |
| WO | 2017/026460 | A1 | 16 February 2017 | US | 2018/0230254 | A1 | |
| | | | | table 1 | | | |
| | | | | EP | 3336143 | A1 | |
| | | | | CN | 107922698 | A | |
| | | | | KR | 10-2018-0039664 | A | |
| | | | | TW | 201714900 | A | |
| JP | 2021-24912 | A | 22 February 2021 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6002791 A
- JP 2016030800 A
- JP 57123205 A
- JP 2016069406 A

**Non-patent literature cited in the description**

- **G. J. RAY.** *Macromolecules,* 1977, vol. 10, 773
- **J. C. RANDALL.** *Macromolecules,* 1982, vol. 15, 353
- **K. KIMURA.** *Polymer,* 1984, vol. 25, 4418